# EUROPÄISCHE PATENTSCHRIFT

(11) **EP 2 702 196 B1**
(45) Veröffentlichungstag und Bekanntmachung des Hinweises auf die Patenterteilung: **23.03.2022**
(21) Anmeldenummer: 12718131.1
(22) Anmeldetag: 18.04.2012
(51) Int. Cl.: D06F 33/30, D06F 34/00, D06F 34/08, A47J 31/52, A47L 15/00, A47L 15/46, D06F 33/32, D06F 33/46, D06F 34/04, D06F 34/28, D06F 58/36, D06F 58/48, D06F 101/00, D06F 101/20, D06F 105/42, D06F 105/52

(54) **HAUSGERÄT MIT NACHTRÄGLICH ABÄNDERBAREM, TECHNISCHEM PROGRAMM SOWIE ZUGEHÖRIGES VERFAHREN UND COMPUTERPROGRAMMPRODUKT**
HOUSEHOLD APPLIANCE HAVING TECHNICAL PROGRAM THAT CAN BE SUBJECTED TO SUBSEQUENT MODIFICATION AND ASSOCIATED METHOD AND COMPUTER PROGRAM PRODUCT
APPAREIL ÉLECTROMÉNAGER POURVU D'UN PROGRAMME TECHNIQUE MODIFIABLE ULTÉRIEUREMENT, AINSI QUE PROCÉDÉ CORRESPONDANT ET PRODUIT PROGRAMME D'ORDINATEUR

(30) Priorität: 27.04.2011 DE 102011017631
(43) Veröffentlichungstag der Anmeldung: 05.03.2014
(73) Patentinhaber: BSH Hausgeräte GmbH, 81739 München (DE)
(72) Erfinder: HÄPP, Claudia, 80639 München (DE); RIESMEYER, Jürgen, 82377 Penzberg (DE); TROJER, Susanne, 85662 Hohenbrunn (DE)
(86) Internationale Anmeldenummer: PCT/EP2012/057057
(87) Internationale Veröffentlichungsnummer: WO 2012/146514

(56) Entgegenhaltungen:
- EP-A2- 0 778 512
- DE-A1-102007 032 052
- DE-A1-102009 046 720
- KR-A- 20070 098 172
- US-A- 6 009 401
- US-A1- 2002 095 483
- US-A1- 2003 028 258

## Beschreibung

Die Erfindung betrifft ein Hausgerät, das mit einem technischen Programm betreibbar ist, um einen durch willkürliche Eingaben des Benutzers initiierten, selbständigen Programmablauf des Hausgerätes ausführbar zu machen, wobei bei dem Programmablauf angesteuerte Aktoren des Hausgerätes eine Einwirkung auf ein zu behandelndes Gut, insbesondere unter Einsatz von mindestens einem durch mindestens einen Aktor wirkbar machbarem Behandlungsmittel, ermöglichen.

Hausgeräte der obig angegebenen Art werden in verschiedener Ausgestaltung eingesetzt. Dabei kann es sich um ein relativ großes Hausgerät, wie eine Waschmaschine, einen Wäschetrockner, eine Geschirrspülmaschine oder um eine relativ kleineres Gerät, wie einen Kaffeevollautomaten, handeln.

Hausgeräte dieser Art basieren in neueren Ausführungen durchweg auf Steuerungen, die in ihrem zentralen Teil auf elektronischen Schaltungskomponenten beruhen und in diesem Teil rechnerartig, d.h. mit einer Zentraleinheit, Speichereinheiten, sowie einem diese Einheiten verbindenden Datenbus aufgebaut sind. Ein selbständiger Programmablauf des Hausgerätes wird als technisches Programm bzw. als Datensatz in einem meist als Festspeicher ausgebildeten Speicher gespeichert. Der Benutzer des Hausgerätes kann darüber hinaus über willkürliche Eingaben über z. B. einen Drehschalter, über Tasten, insbesondere auch Displaytasten den Programmablauf beeinflussen. Das im Hausgerät zu beeinflussende Gut, wie Wäsche bei einer Waschmaschine, wird über einen Energieeintrag, wie Wärme, die einer Lauge mit Waschmittel, als Behandlungsmittel zugeführt wird, sowie einer Bewegung, die über einen Aktor, wie ein Elektromotor gesteuert wird, behandelt. Auch ein Durchlauferhitzer oder eine Heizschlange für den Wärmeeintrag, in ein flüssiges Medium, wie Wasser, bei einem Kaffeeautomaten, oder Waschlauge bei einer Waschmaschine sind als Aktor aufzufassen. Obwohl durch die benannten willkürlichen Eingaben durch den Benutzer äußerst vielfältige Möglichkeiten für verschiedenartige Programmabläufe in einem Hausgerät vorliegend sind, so wurde doch erkannt, dass diese Programmabläufe, die letztlich auf dem Datensatz beruhen, der im Festspeicher gespeichert ist, also werksseitig bei der Herstellung des Hausgerätes bestimmt sind, doch für Feinheiten im Programmablauf, die besondere Effekte auszulösen vermögen, nicht in ausreichendem Umfang geeignet sind. Es hat daher nicht an Vorschlägen gefehlt, auch weitere Speicher, die an der Peripherie eines Hausgerätes einsetzbar sind und mit der rechnerartigen Steuerung des Hausgerätes über den Datenbus verbindbar sind, einzusetzen und damit die Beschränkungen des im Festspeicher gespeicherten Datensatzes in Bezug auf mangelnde Variierbarkeit des Programmablaufes zu überwinden. Es wird hierzu insbesondere auf die Druckschriften DE 10 2009 046 720 A1 und DE 10 2007 021 940 A1 der Anmelderin verwiesen. US2003/0028258A1 und US2002/0095483A1 beschreiben Hausgeräte bei denen Programmdaten über ein Netzwerk geladen werden können. EP0778512A2 und US6009401A beschreiben Verfahren zur Verwaltung von lizensierten Softwareprogrammen. Ferner offenbart DE102007032052A1 ein Hausgerät, mit einem technischen Programm zum Betreiben des Hausgerätes, um einen durch willkürliche Eingaben des Benutzers initiierten, selbständigen Programmablauf des Hausgerätes ausführbar zu machen, wobei bei dem Programmablauf angesteuerte Aktoren des Hausgerätes eine Einwirkung auf ein zu behandelndes Gut ermöglichen, wobei das Hausgerät mit einer Steuerung zur Berücksichtigung unterschiedlicher Tarife für elektrische Energie ausgerüstet ist, bei der Tarifsignale als ein Eingabewert berücksichtigt werden, wobei das Hausgerät auf eine erhöhte Effizienz bei der Berücksichtigung unterschiedlicher Tarife für elektrische Energie ausgelegt ist, und das Hausgerät ausgebildet ist, eine Verbrauchsmessung während eines Betriebs durchzuführen.

Im Vorfeld der Erfindung wurde erkannt, der der Benutzer des Hausgerätes zuerst ein Motiv haben muss, bevor er andere Programmabläufe des Hausgerätes, die über die willkürlich durch ihn beeinflussbaren Eingaben über Tasten, Drehwähler und dgl. hinausgehen, als Möglichkeit zur Steigerung der Effizienz des Hausgerätes ins Auge fasst.

Die Aufgabe der Erfindung besteht daher darin, ein Hausgerät anzugeben, bei dem eine weitergehende Veränderbarkeit eines Programmablaufs dieses Gerätes nur dann erfolgen soll, wenn ein testweiser Betrieb kostengünstig durchführbar ist und dessen Eignung nachweisbar ist.

Diese Aufgabe wird erfindungsgemäß durch das Hausgerät des unabhängigen Anspruchs gelöst. Vorteilhafte Ausführungsformen sind Gegenstand der abhängigen Ansprüche.

Nach der Aufgabenlösung umfasst die Erfindung ein Hausgerät, das mit einem technischen Programm betreibbar ist, um einen durch willkürliche Eingaben des Benutzers initiierten, selbständigen Programmablauf des Hausgerätes ausführbar zu machen, wobei bei dem Programmablauf angesteuerte Aktoren des Hausgerätes eine Einwirkung auf ein zu behandelndes Gut, insbesondere unter Einsatz von mindestens einem, durch mindestens einen Aktor wirkbar machbarem, Behandlungsmittel, ermöglichen, wobei ferner vorgesehen ist, dass mindestens ein Teilbereich des technischen Programms durch einen Benutzer des Hausgerätes ladbar bzw. installierbar ist, wobei zu dem mindestens einen Teilbereich des lad- bzw. installierbaren technischen Programms ein Anlass- bezogenes technisches Programm gehört, das kostenlos verfügbar ist, bis eine Anzahl von Programmabläufen absolviert ist oder ein vorgegebener Zeitraum verstrichen ist.

Bei der Erfindung geht mit einher, dass das ladbare technische Programm, das verfügbar ist bis eine Anzahl von Programmabläufen absolviert ist oder ein vorgegebener Zeitraum verstrichen ist, kostenlos dem Benutzer des Hausgerätes zur Verfügung gestellt wird. Nach Ablauf der Testphase deaktiviert sich dieses Programm bzw. die Software selbsttätig.

Nach einem Test mit einem kostenlos abgegebenen Programm, kann ein nicht irgendwelchen Beschränkungen unterliegendes, technisches Programm endgültig geladen werden. Jedoch ist dafür ein marktüblicher Preis für dieses Softwareprodukt vorzusehen.

Bei einer Waschmaschine kann es sich um ein Sonderprogramm, wie ein "Super- Hemden- bügelfrei Programm" handeln.

Bei einem Kaffeevollautomaten wird mit dem Kauf einer bestimmten, portionierten Kaffeemenge, z. B. in Pads oder Kaffeekapseln, betreffend eine neue Kaffeesorte mit neuem Kaffeearoma ein optimiertes Brühprogramm, das in das Hausgerät bzw. den Kaffeeautomaten ladbar ist, kostenlos mitgeliefert, wobei dies ein Datenträger für das Programm bzw. die Software oder ein Kode zur Feigabe eines herunterladbaren Programms aus dem Internet sein kann. Dieses zur neuen Kaffeesorte gehörende Brühprogramm ist auch nur beschränkt nutzbar, z. B. für eine bestimmte Anzahl von Brühvorgängen.

Auch andere Hausgeräte, können für einen solchen testweisen Einsatz von kostenfreier Software infrage kommen, bis ein endgültiger kostenpflichtiger Erwerb von Software, die keinen Beschränkungen der Nutzung unterliegt, vorgenommen wird.

Ein Hausgerät, bei dem die Erfindung realisiert wird, ist keinesfalls beschränkt auf die zuvor diskutierten Beispielsfälle, da ohne Weiteres einsichtig ist, dass auch andere Hausgeräte, die in ihren Programmabläufen über den im Herstellerwerk festgelegten Umfang hinausgehend einer zusätzlichen Veränderbarkeit zugeführt werden können, einen Mehrwert für den Benutzer eines solchen Hausgerätes abzugeben vermögen. Dabei soll der Benutzer wieder die Möglichkeit erhalten, zuerst einen Testbetrieb mit kostenloser Software durchführen zu können um dann, bei festgestelltem Erfolg, diese Software, die geladen in einen Speicher, der für einen Datenaustausch mit der Zentraleinheit der rechnerartigen Steuerung geeignet ist, ein zusätzliches technisches Programm und damit einen neuartigen Programmablauf auszuführen gestattet, kostenpflichtig erwerben zu können.

Die Realisierung des Umgangs mit zusätzlicher Software und zwar für beide Varianten, nämlich die kostenfreie Variante als auch die kostenpflichtige Variante, kann auf verschiedenartige Weise gelöst werden.

Wird ein hinreichend kompakter Massenspeicher, wie ein USB- Speicherstick, eingesetzt, der zudem über eine bezogen auf die Abläufe bei der Steuerung eines Hausgerätes genügend kurze Zugriffszeit besitzt, eingesetzt, so kann die rechnerartige Steuerung des Hausgerätes unmittelbar über den an eine Anschlussstelle für den Speicherstick am Hausgerät, an die der steuerungsinterne Datenbus geführt ist, mit diesem Speicherstick, der den Quellcode des zusätzlichen technischen Programms aufnimmt, zusammenarbeiten. Es wurde bereits dargelegt, dass Lösungen an Hausgeräten, einen Speicherstick im Bereich der Bedienblende einzusetzen, bekannt sind (DE 10 2009 046 720 A1 und DE 10 2007 021 940 A1).

Soweit es darum gehen sollte, einen Datenverlust, der bei einem Massenspeicher, wie bei einem USB- Stick, auftreten kann, weitestgehend auszuschließen, so steht es an, den auf dem USB- Stick gespeicherten Quellcode des technischen Programms in die Steuerung des Hausgerätes einzulesen. Entsprechende Speicher der Steuerung des Hausgerätes müssen dann aber auch diese Daten bei abgeschaltetem Netz speichern können.

Soweit die Speicherbarkeit aufgrund von installierten Speichern, die ihre Speicherfähigkeit auch bei abgeschaltetem Netz beibehalten können, von weiteren technischen Programmen in der Steuerung des Hausgerätes schon vorgesehen ist, so steht es auch an, dass ein weiteres technisches Programm direkt aus dem Internet von der Steuerung des Hausgerätes aus heruntergeladen werden kann. Dazu muss dann eine Verbindung vom Hausgerät ausgehend zum Internet bestehen, die primär und bevorzugt über ein drahtloses Heimnetzwerk gehen wird. Es kann jedoch auch ein Datenkabel, das zu dem Hausgerät geführt ist, Verwendung finden. Ein Display einer Bedienblende eines Hausgerätes, zusammen mit einer wirkbar gemachten Tastatur, müsste dann einen, einem Notebook angenäherten Bedienumfang haben. Es kann dann die kostenfreie bzw. die kostenpflichtige Software für ein weiteres technisches Programm aus dem Internet auf die Steuerung des Hausgerätes geladen werden.

Es ist jedoch auch möglich, dass das Hausgerät mit einem Diskettenlauswerk, insbesondere optischen Diskettenlaufwerk, ausgestattet wird, bzw. vorgesehen ist, dass ein solches Diskettenlaufwerk an ein Hausgerät anschließbar ist. Es muss eine Verbindung zu dem Datenbus der rechnerartigen Steuerung des Hausgerätes bestehen. Dann kann eine nur lesbare Diskette CD als Programmträger, enthaltend die Software für das zusätzliche technische Programm, dazu dienen, in obig beschriebene, zusätzliche Speicher der Steuerung der Hausgerätes eingelesen zu werden.

Sollte jedoch die Steuerung des zugrundeliegenden Hausgerätes, nicht so autark ausgestattet sein, dass eine Datenmanipulation ähnlich einem Personalcomputer PC oder einem Notebook vorliegt, so steht es ohne Weiteres an, einen PC oder ein Notebook aus dem Haushalt des Benutzers des Hausgerätes einzusetzen.

Es ist dann möglich, ein aus dem Internet herunter geladenes technisches Programm auf einen Speicherstick zu übertragen, der dann dauerhaft dem Hausgerät zugeordnet wird oder dessen Inhalt in interne Speicher des Hausgerätes übertragen wird.

Ebenso ist es möglich, einen Programmträger, wie eine nur lesbare CD mit der kostenfreien oder der kostenpflichtigen Software auf einem PC oder einem Notebook zu lesen und deren Daten mit dem Quellcode auf einen Speicherstick zu übertragen bzw. zu kopieren. Das betreffende Hausgerät kann dann unter Berücksichtigung der Arbeitsweise von dessen rechnerartigen Steuerung unmittelbar oder mittelbar mit der Software auf dem Speicherstick bzw. dem entsprechenden technischen Programm zusammenarbeiten.

Gerade wenn es neben dem Test- weisen Betrieb des zugrundeliegenden Hausgerätes mit kostenloser Software darum geht, mit kostenpflichtiger Software einen weiteren Betrieb des Hausgerätes vorzusehen, sollte das Herunterladen aus dem Internet bevorzugt anstehen, da dann auch Aktualisierungen von Software, sogenannte Updates, leicht zu berücksichtigen sind.

Gemäß der Erfindung ist das Hausgerät mit einer Steuerung zur Berücksichtigung unterschiedlicher Tarife ausgerüstet (vergleiche DE 10 2010 040 297 A1), bei der Tarifsignale als Eingabewert berücksichtigt werden, der über das Internet eingegeben wird. Dabei ist das anlassbezogene technische Programm auf eine höhere Effizienz bei einer Berücksichtigung verschiedener Tarife für elektrische Energie ausgelegt ist.

Ein solches Programm für einen noch weiter verbesserten Umgang mit elektrischer Energie kann sowohl ein Beschränkungen in der Nutzung unterliegendes Programm oder ein, keinen Beschränkungen in der Nutzung unterliegendes, Programm sein, das vergütungspflichtig gemacht werden Das Hausgerät ist ausgebildet, eine Verbrauchsmessung durchzuführen, wie dies in unserer Anmeldung DE 10 2011 017574 A1 ausgeführt ist, um anhand eines Testbetriebes mit kostenloser Software entscheiden zu können, ob sich der Bezug der kostenpflichtigen Software als Option bewährt, um langfristig den Energieverbrauch weiter senken zu können.

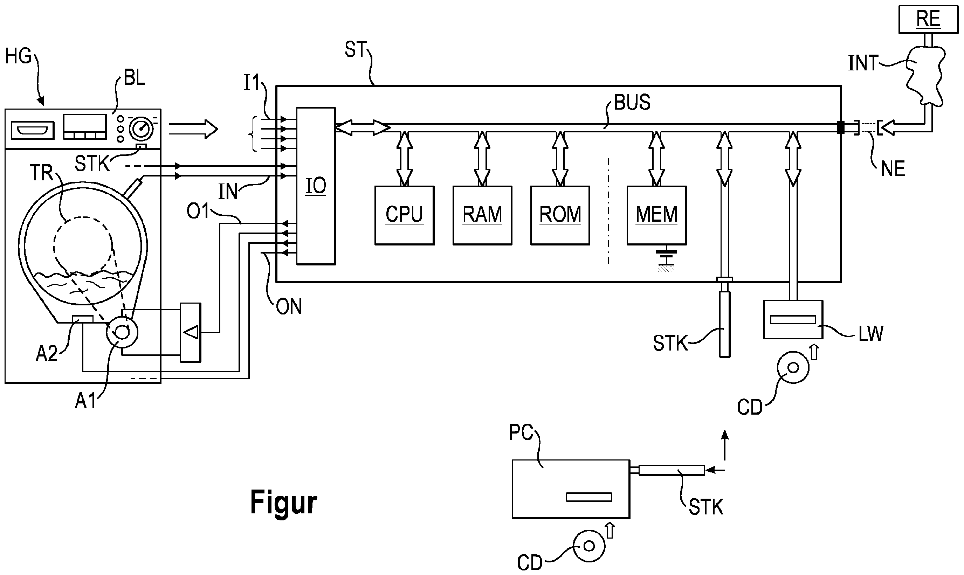

Zunächst wird noch ein schematisches Blockschaltbild zur Veranschaulichung der Erfindung angegeben, das sich auf eine einzige Figur bezieht.

Als Hausgerät HG ist eine Waschmaschine angedeutet. Es kann jedoch auch ein anderes Hausgerät bei der Erfindung eingesetzt werden. Im oberen Teil des Hausgerätes ist eine Bedienblende BL vorgesehen, anhand derer ein Benutzer den auszuwählenden Programmablauf mit Eingabemitteln, wie Drehschalter, Tasten, Display und Displaytasten (ohne Bezugszeichen) einstellt. Die Eingabemittel sind so ausgelegt, dass im Ergebnis ein oder mehrere Signale abgegeben werden können, die von einer Steuerung ST in deren Eingabe-/ Ausgabeblock IO für die Datenverarbeitung in einer Zentraleinheit CPU der rechnerartig aufgebauten Steuerung des Hausgerätes als Eingabe I1 bis IN verfügbar sind. Zu diesen Eingaben gehören auch gemessene Werte, die im Betriebsablauf des Hausgerätes anfallen und auch von der Steuerung ST berücksichtigt werden. Dies ist auch in der Figur angedeutet, ohne dass die Messstellen genauer dargestellt sind.

Im Ausgabebereich der Steuerung, vergleiche den Block IO, sind auch Ausgaben O1 bis ON angegeben, wobei lediglich ein Aktor A1, dargestellt ist, der hier einen Antriebsmotor für die Trommel TR der Waschmaschine betrifft. Es kann sich auch um einen beliebigen Aktor an einem Hausgerät handeln.

In der Steuerung ST ist auch ein Datenaustausch über einen Datenbus BUS vorgesehen. Ein Hausgerät, das noch nicht nach der erfindungsgemäßen Lehre ausgebildet ist, weist lediglich die Speicherbausteine RAM und ROM auf, mit denen die CPU unter Berücksichtigung der Daten des IO Blockes zusammenarbeitet. Im Speicherbaustein ROM, der ein Festspeicher ist, also im Betrieb nur gelesen werden kann, ist das standardmäßige technische Programm des Hausgerätes gespeichert, auf das hinsichtlich Variabilität lediglich durch willkürliche Eingaben des Benutzers des Hausgerätes über einen Bedienoberfläche bzw. Bedienblende BL eingewirkt werden kann. Soll ein technisches Programm als solches für das Hausgerät weiter verändert werden, so wird hierfür weiterer Speicherplatz benötigt, um den Quellkode bzw. Programmkode eines weiteren bzw. ergänzenden technischen Programms aufnehmen zu können. Es hat sich gezeigt, dass im einfachsten Fall es genügt, einen Massenspeicher, wie einen Speicherstick STK für den Programmkode des ergänzenden technischen Programms vorzusehen, der z. B. über einen Buchse (USB -Schnittstelle), lokal insbesondere der Bedienblende BL zugeordnet (angedeutet), angeschlossen werden kann und eine Verbindung mit dem Datenbus BUS aufweist.

Da ein solcher Massenspeicher, wie USB Stick, für die Weitergabe an den Benutzer des Hausgerätes ungeeignet sein dürfte, dürfte es sich anbieten, einen anderen Programmträger, wie eine nur lesbare Disk CD vorzusehen und zu berücksichtigen, dass der Benutzer des Hausgerätes es versteht, einen Personal Computer PC oder ein Notebook einzusetzen, um aus einem in Form einer Disk CD erhaltenen Datenträger einen Speicherstick STK mit dem Programmkode mit dem weiteren bzw. ergänzenden technischen Programms durch Kopieren zu erhalten.

Sollte das Hausgerät selbst über keine Datenverbindung zum Internet verfügen, so kann einer solcher Massenspeicher STK auch dazu dienen, ein mit dem Personal Computer PC oder dem Notebook herunter geladenes Programm aufzunehmen.

Der Massenspeicher STK ist auf jeden Fall dazu geeignet, ein Programm, das einer Beschränkung in der Nutzung unterliegt als auch ein Programm, das keinen Beschränkungen in der Nutzung unterliegt, hinsichtlich dessen Quellkode aufzunehmen. Ein Programm, das Beschränkungen in der Nutzung unterliegt, ist z.B. nach einer gewissen Zeit oder nach einer bestimmten Anzahl von Nutzungen automatisch deaktivierbar.

In einer weiteren Ausgestaltung der Erfindung ist vorgesehen, dass an den Datenbus BUS ein Speicher MEM angeschlossen ist, in den das zuvor erläuterte zusätzliche technische Programm bzw. dessen Quellkode eingeschrieben werden kann und der auch lesbar, z. B. durch die Zentraleinheit CPU, ist. Es ist dafür Sorge zu tragen, dass dieser Speicher MEM bei abgeschaltetem Netz keinem Datenverlust unterliegt. Es kann eine Batteriepufferung vorgesehen sein.

Bei Vorhandensein des Speichers MEM ist es möglich, dass ein in dem zuvor beschriebenen Speicherstick STK aufgenommenes Programm bzw. dessen Quellcode in den Speicher MEM unter Zuhilfenahme von Steuerbefehlen der Zentraleinheit CPU zu übertragen. Damit ist keine dauernde Kopplung des Speichersticks STK im Betrieb des Hausgerätes erforderlich.

Ferner ist es bei Vorhandensein des Speichers MEM möglich, dass das Hausgerät selbst einen elektrischen Anschluss (ohne Bezugszeichen) für ein Laufwerk LW für die Aufnahme einer, insbesondere optisch lesbaren, Disk CD aufweist oder dem Hausgerät selbst ein solches Laufwerk für eine Disk CD zugeordnet ist. Dann ist es möglich, dass ein auf der Disk CD abgespeichertes, zusätzliches technisches Programm bzw. dessen Quellkode in den Speicher MEM unter Zuhilfenahme von Steuerbefehlen der Zentraleinheit CPU eingelesen werden kann.

Ferner ist es möglich, unter Zuhilfenahme von Steuerbefehlen der Zentraleinheit CPU aus dem Internet INT, d.h. aus einem mit dem Internet verbundenen Rechner RE, ein zusätzliches technisches Programm herunterzuladen und in den Speicher MEM einzuschreiben. Es muss dann lediglich eine Verbindung von dem Hausgerät zum Internet bestehen. Innerhalb des Haushaltes in dem das Hausgerät sich befindet, kann zunächst ein drahtloses Netzwerk NE sich befinden, das über weitere Schnittstellen, wie Router (nicht dargestellt), mit dem Internet verbunden ist.

Bei einer Verbindung mit dem Internet ist es auch möglich, nicht nur die kostenfreie Software für deren testweise Verwendung im Hausgerät zu beziehen, sondern auch die kostenpflichtige Software und deren Aktualisierungen zu beziehen, wobei die erforderliche Lizenzgebühr über ein ausreichend sicheres, dem üblichen Gebrauch in Internet zugängliches, Bezahlsystem zu entrichten ist.

### Bezugszeichenliste

- HG: Hausgerät
- BL: Bedienblende
- ST: Steuerung
- IO: Eingabe-/Ausgabeblock
- CPU: Zentraleinheit
- I1 bis IN: Eingaben
- O1 bis ON: Ausgaben
- A1 bis AN: Aktoren
- TR: Trommel
- BUS: Datenbus
- RAM: Schreib-/Lese- Speicherbaustein
- ROM: Festwert- Speicherbaustein
- STK: Speicherstick
- CD: Disk
- MEM: Speicher mit Batterie-Pufferung
- PC: Personal- Computer
- INT: Internet
- NE: drahtloses Netzwerk
- RE: Rechner in INT

## Patentansprüche

1. Hausgerät mit einem technischen Programm zum Betreiben des Hausgerätes, um einen durch willkürliche Eingaben des Benutzers initiierten, selbständigen Programmablauf des Hausgerätes ausführbar zu machen, wobei
- bei dem Programmablauf angesteuerte Aktoren des Hausgerätes eine Einwirkung auf ein zu behandelndes Gut, insbesondere unter Einsatz von mindestens einem, durch mindestens einen Aktor wirkbar machbarem, Behandlungsmittel, ermöglichen;
- es ferner vorgesehen ist, dass mindestens ein Teilbereich des technischen Programms durch einen Benutzer des Hausgerätes ladbar bzw. installierbar ist;
- zu dem mindestens einen Teilbereich des lad- bzw. installierbaren technischen Programms ein anlassbezogenes technisches Programm gehört, das in einer Testphase kostenlos verfügbar ist, bis eine Anzahl von Programmabläufen absolviert ist oder ein vorgegebener Zeitraum verstrichen ist, um sich nach Ablauf der Testphase selbsttätig zu deaktivieren; wobei das anlassbezogene technische Programm zu einem neuartigen Programmablauf des Hausgeräts führt;
- das Hausgerät mit einer Steuerung zur Berücksichtigung unterschiedlicher Tarife für elektrische Energie ausgerüstet ist, bei der Tarifsignale als ein Eingabewert berücksichtigt werden, der über das Internet eingegeben wird;
- das anlassbezogene technische Programm auf eine erhöhte Effizienz bei der Berücksichtigung unterschiedlicher Tarife für elektrische Energie ausgelegt ist; und
- das Hausgerät ausgebildet ist, eine Verbrauchsmessung während eines Testbetriebs mit dem anlassbezogenen technischen Programm durchzuführen, um zu überprüfen, ob durch einen Bezug des anlassbezogenen technischen Programms ein Energieverbrauch des Hausgeräts gesenkt wird.

2. Hausgerät nach Anspruch 1, **dadurch gekennzeichnet, dass** das Hausgerät (HG) eine Waschmaschine ist.

3. Hausgerät nach Anspruch 1, **dadurch gekennzeichnet, dass** das Hausgerät eine Brühgetränkemaschine, wie ein Kaffeevollautomat ist, bei dem insbesondere eine portionierte Kaffeemenge einer speziellen Kaffeesorte für ein darauf abgestimmtes Behandlungsprogramm, wie Brühprogramm, ladbar ist.

4. Hausgerät nach einem der Ansprüche 1 bis 3, **dadurch gekennzeichnet, dass** eine Einfügungsstelle für einen speziellen Datenträger bzw. Massenspeicher, wie einen USB- Stick (STK) in Zuordnung zu einer Bedienblende (BL) des Hausgerätes (HG) vorgesehen ist, über die der Teilbereich des technischen Programms ladbar ist.

5. Hausgerät nach einem der Ansprüche 1 bis 3, **dadurch gekennzeichnet, dass** das Hausgerät mit einem Diskettenlaufwerk (LW) ausgestattet ist, über das der Teilbereich des technischen Programms ladbar ist, oder **dadurch gekennzeichnet, dass** das Hausgerät (HG) mit einem Diskettenlaufwerk (LW) verbindbar ist, über das der Teilbereich des technischen Programms ladbar ist.

6. Hausgerät nach einem der Ansprüche 1 bis 5, **dadurch gekennzeichnet, dass** ein Datentransfer vorgesehen ist, mittels dessen ein Datenaustausch mit dem Internet (INT) realisierbar ist, über das der Teilbereich des technischen Programms ladbar ist.

## Claims

1. Household appliance with a technical program for operating the household appliance, in order to make it possible to execute an automatic program sequence of the household appliance that is initiated by arbitrary inputs of the user, wherein
- actuators of the household appliance actuated during the program sequence enable an action upon an item to be treated, in particular with the use of at least one treatment agent that can be made active by at least one actuator;
- it is further provided that at least one subregion of the technical program can be loaded or installed by a user of the household appliance;
- belonging to the at least one subregion of the technical program that can be loaded or installed is an event-driven technical program, which is available free of charge in a testing phase until a number of program sequences have completed or a predefined period of time has passed, in order to deactivate automatically once the test phase has expired; wherein the event-driven technical program leads to a new type of program sequence of the household appliance;
- the household appliance is equipped with a controller for taking into consideration different tariffs for electrical energy, in which tariff signals are taken into consideration as an input value which is input via the Internet;
- the event-driven technical program is designed for an increased efficiency while taking into consideration different tariffs for electrical energy; and
- the household appliance is embodied to perform a consumption measurement during a test operation with the event-driven technical program, in order to check whether an energy consumption of the household appliance is lowered by referring to the event-driven technical program.

2. Household appliance according to claim 1, **characterised in that** the household appliance (HG) is a washing machine.

3. Household appliance according to claim 1, **characterised in that** the household appliance is a brewed beverage machine, such as a fully automatic coffee machine, in which in particular a portioned amount of coffee of a specific type of coffee can be loaded for a treatment program adapted thereto, such as a brewing program.

4. Household appliance according to one of claims 1 to 3, **characterised in that** an insertion point for a specific data carrier or mass storage unit, such as a USB stick (STK), is provided assigned to an operating panel (BL) of the household appliance (HG), via which the subregion of the technical program can be loaded.

5. Household appliance according to one of claims 1 to 3, **characterised in that** the household appliance is equipped with a disk drive (LW), via which the subregion of the technical program can be loaded, or **characterised in that** the household appliance (HG) can be connected to a disk drive (LW), via which the subregion of the technical program can be loaded.

6. Household appliance according to one of claims 1 to 5, **characterised in that** a data transfer is provided, by means of which it is possible to implement a data exchange with the Internet (INT), via which the subregion of the technical program can be loaded.

## Revendications

1. Appareil ménager comprenant un programme technique de fonctionnement de l'appareil ménager pour rendre exécutable le déroulement autonome d'un programme de l'appareil ménager initié par les entrées délibérées d'un utilisateur, dans lequel
- les acteurs de l'appareil ménager sollicités pour le déroulement du programme permettent d'influer sur un produit à traiter, en particulier en utilisant au moins un moyen de traitement rendu opérable par au moins un acteur ;
- il est en outre prévu qu'au moins un secteur partiel du programme technique puisse être chargé ou installé par un utilisateur de l'appareil ménager ;
- un programme technique choisi au gré de l'occasion, lequel est disponible gratuitement en phase de test, appartient au au moins un secteur partiel du programme technique à charger ou à installer, jusqu'à ce qu'un nombre de déroulements de programme soit achevé ou qu'une durée prédéfinie se soit écoulée pour se désactiver automatiquement à la fin de la phase test ; le programme technique choisi au gré de l'occasion conduisant vers un déroulement de programme de l'appareil ménager d'un nouveau type ;
- l'appareil ménager est équipé d'un réglage tenant compte de différents tarifs pour l'énergie électrique, dans lequel des signaux tarifaires sont pris en compte comme une valeur d'entrée, laquelle est introduite via l'Internet ;
- le programme technique choisi au gré de l'occasion est étudié pour une rentabilité accrue s'il est tenu compte de différents tarifs pour l'énergie électrique ; et
- l'appareil ménager est configuré pour exécuter une mesure de la consommation pendant un fonctionnement à l'essai avec le programme technique choisi au gré de l'occasion, pour vérifier si en référence au programme technique choisi au gré de l'occasion, la consommation d'énergie de l'appareil ménager est bien en baisse.

2. Appareil ménager selon la revendication 1, **caractérisé en ce que** l'appareil ménager (HG) est une machine à laver.

3. Appareil ménager selon la revendication 1, **caractérisé en ce que** l'appareil ménager est une machine à boissons à percolation, comme une machine à café entièrement automatique, dans laquelle on peut particulièrement charger une quantité de café bien dosée d'un type de café spécial pour un programme de traitement approprié à celui-ci, comme le programme percolation.

4. Appareil ménager selon l'une des revendications 1 à 3, **caractérisé en ce qu'**un point d'insertion est prévu pour un support spécial de données ou une mémoire de masse, comme une clé USB (STK) subordonnée à un bandeau de commande (BL) de l'appareil ménager (HG), par le biais duquel le secteur partiel du programme technique peut être chargé.

5. Appareil ménager selon l'une des revendications 1 à 3, **caractérisé en ce que** l'appareil ménager est équipé d'un lecteur de disquette (LW), par le biais duquel le secteur partiel du programme technique peut être chargé, ou **caractérisé en ce que** l'appareil ménager (HG) peut être raccordé à un lecteur de disquette (LW), par le biais duquel le secteur partiel du programme technique peut être chargé.

6. Appareil ménager selon l'une des revendications 1 à 5, **caractérisé en ce qu'**un transfert de données est prévu, au moyen duquel un échange de données avec l'Internet (INT) est réalisable, par le biais duquel le secteur partiel du programme technique peut être chargé.
